# EUROPEAN PATENT APPLICATION

(11) **EP 4 560 749 A1**
(43) Date of publication of application: **28.05.2025**
(21) Application number: 23843383.3
(22) Date of filing: 19.07.2023
(51) Int. Cl.: H01M 10/04, H01M 50/105, H01M 50/178

(54) **TRANSFER DEVICE FOR SECONDARY BATTERY**

(30) Priority: 22.07.2022 KR 20220091362
(71) Applicant: LG Energy Solution, Ltd., Seoul 07335 (KR)
(72) Inventor: JANG, Nam Jin, Daejeon 34122 (KR); LEE, Seung Man, Daejeon 34122 (KR); LEE, Si Yeol, Daejeon 34122 (KR); KIM, Do Hun, Daejeon 34122 (KR)
(74) Representative: Goddar, Heinz J.
(86) International application number: PCT/KR2023/010430
(87) International publication number: WO 2024/019537

(57) **Abstract**

The present invention relates to a transfer apparatus for a secondary battery, and more particularly, to a transfer apparatus for a secondary battery including an electrode assembly, in which an electrode and a separator are alternately stacked, and a battery case which accommodates the electrode assembly.

The present invention provides a transfer apparatus for a secondary battery in an apparatus for manufacturing the secondary battery including: an electrode assembly in which an electrode and a separator are alternately stacked; and a battery case that accommodates the electrode assembly, the transfer apparatus including: a pair of accommodation part grippers that grip an accommodation part, in which the electrode assembly is accommodated, of the battery case; and a pair of frame part grippers that grip an frame part extending from an edge of the accommodation part of the battery case.

## Description

### TECHNICAL FIELD

### CROSS-REFERENCE TO RELATED APPLICATION

The present application claims the benefit of the priority of Korean Patent Application No. 10-2022-0091362, filed on July 22, 2022, which is hereby incorporated by reference in its entirety.

### TECHNICAL FIELD

The present invention relates to a transfer apparatus for a secondary battery, and more particularly, to a transfer apparatus for a secondary battery including an electrode assembly, in which an electrode and a separator are alternately stacked, and a battery case which accommodates the electrode assembly.

### BACKGROUND ART

Secondary batteries are rechargeable unlike primary batteries and capable of being reduced in size and increasing capacity and thus, much research and development for the secondary batteries are carried out recently. As the technical development of and a demand for mobile devices increase, a demand for the secondary batteries as energy sources rapidly increases.

According to the shape of the battery case, the secondary batteries are classified into coin type batteries, cylindrical type batteries, prismatic type batteries, and pouch type batteries. In the secondary batteries, an electrode assembly mounted in the battery case is a chargeable and dischargeable power generating device having a structure in which an electrode and a separator are stacked.

The electrode assembly may be generally classified into a jelly-roll-type electrode assembly wound by interposing a separator between sheet-shaped positive and negative electrodes, each of which is coated with an active material, a stacked type electrode assembly in which a plurality of positive and negative electrodes are stacked in sequence with a separator interposed therebetween, and a stack and folding type electrode assembly in which stacked type unit cells are wound together with a separation film having a long length.

Recently, pouch type secondary batteries, each of which has a structure in which a stacked type or stack and folding type electrode assembly is embedded in a battery case made of an aluminum laminate sheet, attract a lot of interest for reasons such as low manufacture costs, small weight, and easy change in shape, and use thereof also gradually increases.

These pouch type secondary batteries are manufactured through a secondary battery manufacturing process such as an assembly process of accommodating an electrode assembly together with an electrolyte inside a battery case, a sealing process of sealing the electrode assembly, and an activation process of activating the electrode assembly.

This secondary battery manufacturing process is necessarily accompanied by transfer of the secondary batteries. Defective phenomena such as folding of a separator may occur during the transfer of secondary batteries. That is, during embedding the electrode assembly and the electrolyte in the battery case and transferring the secondary batteries, a phenomenon in which the electrolyte is biased to one side may occur, and a portion of the separator of the electrode assembly, particularly a portion of the outermost separator at an electrode tab side, may be folded due to this biased electrolyte. In this case, a problem that quality of the secondary batteries is negatively affected may occur, and thus there is a need for the technical development to solve this problem.

### DISCLOSURE OF THE INVENTION

### TECHNICAL PROBLEM

The present invention has been devised to solve the problems as above and an object of the present invention is to provide a transfer apparatus for a secondary battery, which is capable of preventing defective phenomena such as folding of a separator during a process for manufacturing the secondary battery.

### TECHNICAL SOLUTION

The present invention provides a transfer apparatus for a secondary battery in an apparatus for manufacturing the secondary battery including: an electrode assembly in which an electrode and a separator are alternately stacked; and a battery case that accommodates the electrode assembly, the transfer apparatus including: a pair of accommodation part grippers that grip an accommodation part, in which the electrode assembly is accommodated, of the battery case; and a pair of frame part grippers that grip an frame part extending from an edge of the accommodation part of the battery case.

The accommodation part grippers may be provided to grip the edge of the accommodation part.

The secondary battery may further include an electrode lead protruding from at least one end of the battery case, and the accommodation part grippers may be provided to grip the edge of the accommodation part, which is adjacent to the electrode lead.

Each of the frame part grippers may include a pair of gripper units which are provided to face each other with the battery case therebetween, and of which a distance therebetween is adjusted.

Each of the gripper units may have an end provided so that a surface facing the battery case is inclined toward a distal end in a direction opposite to the battery case.

The frame part gripper may further include a friction pad provided on a surface, which faces the battery case, of each of the gripper units.

A material of the friction pad may include rubber.

Each of the accommodation part grippers may include a pair of gripper units provided to face each other with the battery case therebetween, and of which a distance therebetween is adjusted.

Each of the gripper units may have an end provided so that a surface facing the battery case is inclined toward a distal end in a direction opposite to the battery case.

The accommodation part gripper may further include a cushion pad provided on a surface, which faces the battery case, of each of the gripper unit.

A material of the cushion pad may include ethylene-vinyl acetate (EVA).

The transfer apparatus may further include at least one connection part that connects the accommodation part gripper to the frame part gripper.

The accommodation part gripper, the frame part gripper, and the connection part may be detachably coupled to each other.

The connection part may have at least one through-hole defined in one side surface, and the transfer apparatus may further include a fixing part passing through the through-hole and fixed and coupled to the accommodation part gripper.

The through-hole may have an oval shape that is elongated in a thickness direction of the connection part, and in the accommodation part gripper, a height between the accommodation part gripper and the connection part may be adjusted according to a coupling position of the fixing part to the through-hole.

The transfer apparatus may further include a position moving part which is connected to one of the frame part gripper and the accommodation part gripper and moves a position of the one of the frame part gripper and the accommodation part gripper.

The position moving part may include: a body; and a pair of arm parts, each of which is connected to the body and at least one of the frame part gripper or the accommodation part gripper, wherein the pair of arm parts are provided to be rotatable while conducting a circular arc motion about the body.

### ADVANTAGEOUS EFFECTS

The present invention may include the pair of accommodation part grippers that grip the accommodation part, in which the electrode assembly is accommodated, of the battery case. Accordingly, the present invention has the effect that the separator of the electrode assembly may be prevented from being folded due to the flowing of the electrolyte during the transfer of the secondary battery.

### BRIEF DESCRIPTION OF THE DRAWINGS

FIG. 1 is a front view of a secondary battery.
FIG. 2 is a plan view illustrating a transfer apparatus for a secondary battery according to Embodiment 1 of the present invention.
FIG. 3 is a detailed side view illustrating an accommodation part gripper, an frame part gripper, a connection part, and an arm part of the transfer apparatus for the secondary battery in FIG. 2.
FIG. 4 is a detailed back view illustrating an accommodation part gripper, an frame part gripper, a connection part, and an arm part of the transfer apparatus for the secondary battery in FIG. 2.
FIGS. 5A to 5D are conceptual view sequentially illustrating states in which the transfer apparatus for the secondary battery in FIG. 2 transfers the secondary battery.
FIG. 6 is a detailed side view illustrating a gripper unit of an accommodation part gripper of a transfer apparatus for a secondary battery according to Embodiment 2 of the present invention.
FIG. 7 is a detailed side view illustrating a gripper unit of an frame part gripper of the transfer apparatus for the secondary battery according to Embodiment 2 of the present invention.

### MODE FOR CARRYING OUT THE INVENTION

Hereinafter, preferred embodiments of the present invention will be described in detail with reference to the accompanying drawings to enable those skilled in the art to which the present invention pertains to easily carry out the present invention. The present invention may, however, be embodied in different forms and should not be construed as limited by the embodiments set forth herein.

The parts unrelated to the description, or the detailed descriptions of related well-known art that may unnecessarily obscure subject matters of the present invention, will be ruled out in order to clearly describe the present invention. Like reference numerals refer to like elements throughout the whole specification.

Moreover, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

### Embodiment 1

The present invention provides a transfer apparatus 100 for a secondary battery in an apparatus for manufacturing a secondary battery 10 including an electrode assembly 11, in which an electrode and a separator are alternately stacked, and a battery case 12 which accommodates the electrode assembly 11, the transfer apparatus including a pair of accommodation part grippers 110 which grip an accommodation part 12a, in which the electrode assembly 11 is accommodated, of the battery case 12, and a pair of frame part grippers 120 which grip an frame part 12b extending from an edge of the accommodation part 12a of the battery case 12.

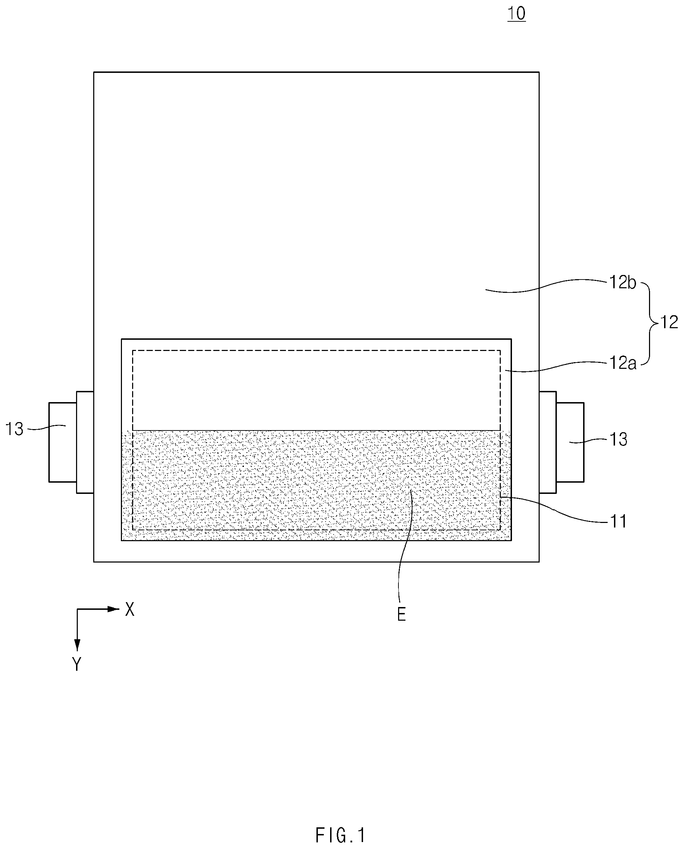

First, as illustrated in FIG. 1, the secondary battery 10 may include the electrode assembly 11, in which the electrode and the separator are alternately stacked, and the battery case 12 which accommodates the electrode assembly 11.

Here, the electrode assembly 11 is a component, in which the electrode and the separator are stacked, and may have various structures. For example, the electrode assembly 11 may have a structure in which a positive electrode current collector/a positive electrode active material layer/a separator/a negative electrode active material layer/a negative electrode current collector are stacked in sequence and thus, the positive electrode active material layer on one surface of the separator faces the negative electrode active material layer on the other surface of the separator. Here, at least one electrode tab may be provided on the electrode, and the electrode tab may be electrically connected to an electrode lead 13 to be described later. Here, the electrode assembly 11 is a component accommodated inside the battery case 12, and it is noted that the electrode assembly 11 is indicated in dotted lines on the drawings.

The battery case 12 in which the electrode assembly 11 is accommodated may include the accommodation part 12a, in which the electrode assembly 11 is accommodated, and the frame part 12b extending from the edge of the accommodation part 12a.

Specifically, the accommodation part 12a may be understood as a region in which a partial region of the battery case 12 is formed to be recessed to define an empty space. The electrode assembly 11 may be accommodated in the empty space, and an electrolyte E may be injected into the empty space.

The frame part 12b is a component, which extends from the edge of the accommodation part 12a, and may have a structure having an edge sealed. This sealed structure may be intended to prevent the electrode assembly 11 accommodated inside the battery case 12 from being damaged by exposure to external moisture, air, and the like, and may be intended to prevent the electrolyte E injected into the battery case 12 from leaking to the outside.

The electrode lead 13 may protrude from at least one end of the battery case 12. Here, the electrode lead 13 may be understood as a component having one end, which is connected to the electrode assembly 11 inside the battery case 12, and the other end which is electrically connected to another secondary battery 10 or an electric device outside the battery case 12.

In the secondary battery 10 as above, the negative electrode needs to have an area large enough to cover the positive electrode in order to prevent lithium precipitation. Thus, in a process of bonding the positive electrode/separator/negative electrode, an edge portion of the separator on which only the negative electrode is present may be easily folded when the electrolyte E flows. In particular, this folding phenomenon may easily occur in the outermost separator disposed on an edge at a side of the electrode lead 13 or the electrode tab.

In addition, the secondary battery 10 may be moved in a state in which front/rear surfaces are reversed during the transfer, and here, when the secondary battery 10 is rotated to reverse the front/rear surfaces of the secondary battery 10, a phenomenon in which the electrolyte E is biased may be intensified. Thus, a rotation speed at which the secondary battery 10 is rotated may be decreased to reduce a degree of the flowing of the electrolyte E, but this may cause another problem that the production is reduced.

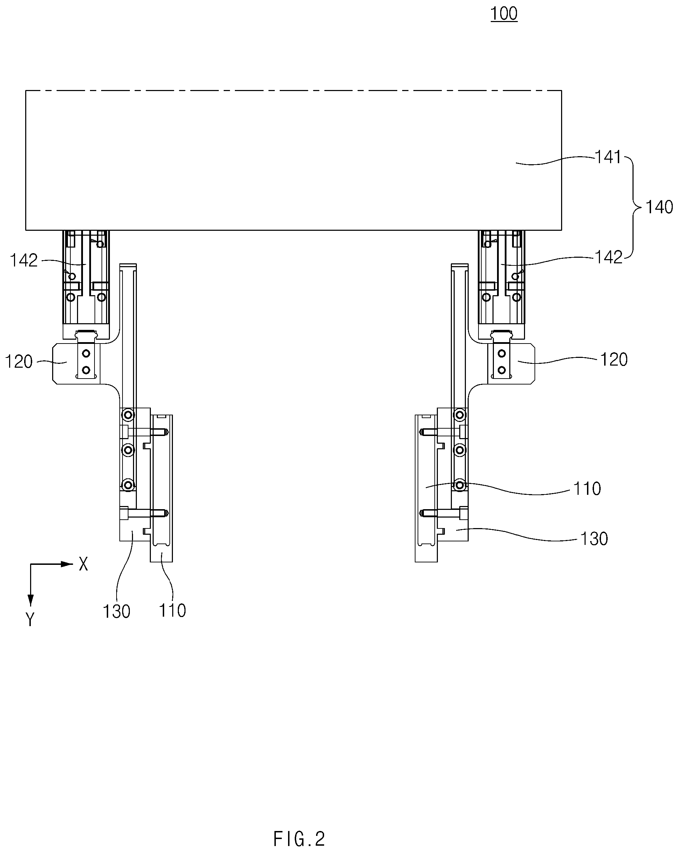

In order to solve the problems as above, as illustrated in FIG. 2, the present invention may provide the transfer apparatus 100 for the secondary battery including the accommodation part grippers 110 and the frame part grippers 120 so as to secure the production and also prevent the folding phenomenon of the separator of the electrode assembly 11 during the transfer of the secondary battery 10. Hereinafter, the accommodation part grippers 110 and the frame part grippers 120 will be described in more detail.

First, the accommodation part grippers 110 are components that grip the accommodation part 12a, in which the electrode assembly 11 is accommodated, of the battery case 12, and may have various configurations.

Specifically, the accommodation part grippers 110 are components that grip the secondary battery 10 together with the frame part grippers 120 during the transfer of the secondary battery 10, and may be understood as components that serve as a kind of a dam that prevents the flowing of the electrolyte E injected into the accommodation part 12a of the battery case 12.

Here, in the accommodation part grippers 110, any region may grip the accommodation part 12a as long as the region corresponds to the accommodation part 12a. However, the accommodation part grippers 110 may be provided to press an edge of the accommodation part 12a, at which the separator is prone to being folded.

Here, an edge of the accommodation part 12a, which is adjacent to the electrode tab and/or the electrode lead 13, of the edge of the accommodation part 12a is a region, which greatly affects quality of the secondary battery 10 when the folding of the separator occurs, and the accommodation part grippers 110 may be provided to press the edge of the accommodation part 12a, which is adjacent to the electrode lead 13 or the electrode tab.

The accommodation part grippers 110 may have any structure as long as the structure is capable of gripping the accommodation part 12a.

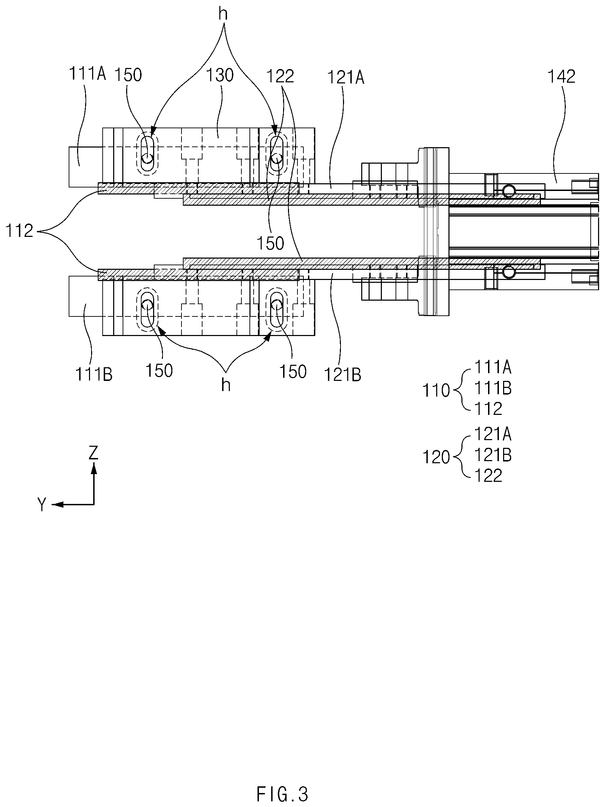

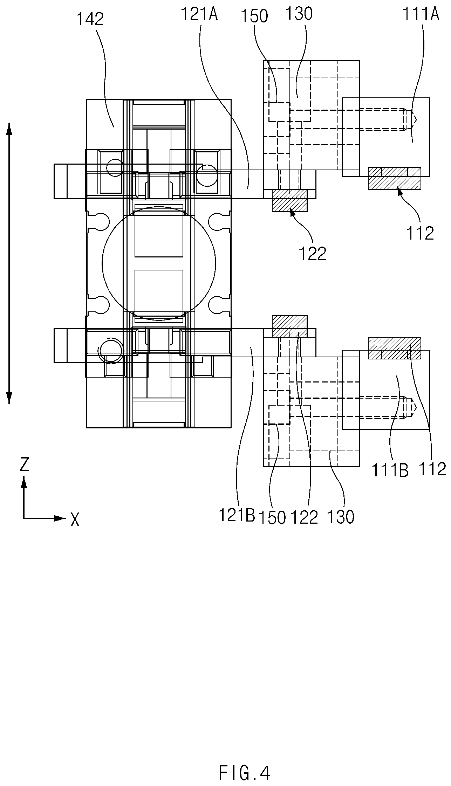

For example, as illustrated in FIGS. 3 and 4, the accommodation part grippers 110 may include a pair of gripper units 111A and 111B which are provided to face each other with the battery case 12 therebetween, and of which a distance therebetween is adjusted.

Specifically, the pair of gripper units 111A and 111B may be disposed above and below the battery case 12, respectively, and provided so that the distance between the gripper units 111A and 111B is adjusted based on a thickness direction of the battery case 12 (direction parallel to a Z direction in FIGS. 3 and 4). Accordingly, the gripper units 111A and 111B may press and grip the accommodation part 12a.

Here, the accommodation part grippers 110 may further include a cushion pad 112 provided on a surface, which faces the battery case 12, of each of the gripper units 111A and 111B. The cushion pad 112 may include various materials, and may include, for example, ethylene-vinyl acetate (EVA).

This cushion pad 112 may serve to prevent a surface of the accommodation part 12a from being damaged when the gripper units 111A and 111B press the accommodation part 12a.

The frame part grippers 120 are components that grip the frame part 12b extending from the edge of the accommodation part 12a of the battery case 12, and may have various configurations.

Specifically, the frame part grippers 120 are components that grip the secondary battery 10 together with the accommodation part grippers 110 described above during the transfer of the secondary battery 10, and may be understood as components that more stably grip the secondary battery 10 to improve the transfer stability of the secondary battery 10.

Here, in the frame part grippers 120, any region may grip the frame part 12b as long as the region corresponds to the frame part 12b of the secondary battery 10. The frame part 12b may be provided to press an edge, from which the electrode lead 13 protrudes, of the frame part 12b in consideration of a connection relationship with the accommodation part grippers 110 described above.

The frame part grippers 120 may have any structure as long as the structure is capable of gripping the frame part 12b.

For example, as illustrated in FIGS. 3 and 4, the frame part grippers 120 may include a pair of gripper units 121A and 121B which are provided to face each other with the battery case 12 therebetween, and of which a distance therebetween is adjusted.

Specifically, the pair of gripper units 121A and 121B may be disposed above and below the battery case 12, respectively, and provided so that the distance between the gripper units 121A and 121B is adjusted based on the thickness direction of the battery case 12 (direction parallel to the Z direction in FIGS. 3 and 4). Accordingly, the gripper units 121A and 121B may press and grip the frame part 12b.

Here, the frame part grippers 120 may further include a friction pad 122 provided on a surface, which faces the battery case 12, of each of the gripper units 121A and 121B. The friction pad 122 may include various materials, and may include, for example, rubber or silicon.

This friction pad 122 may serve to prevent sliding from the battery case 12 when the gripper units 121A and 121B press and grip the battery case 12.

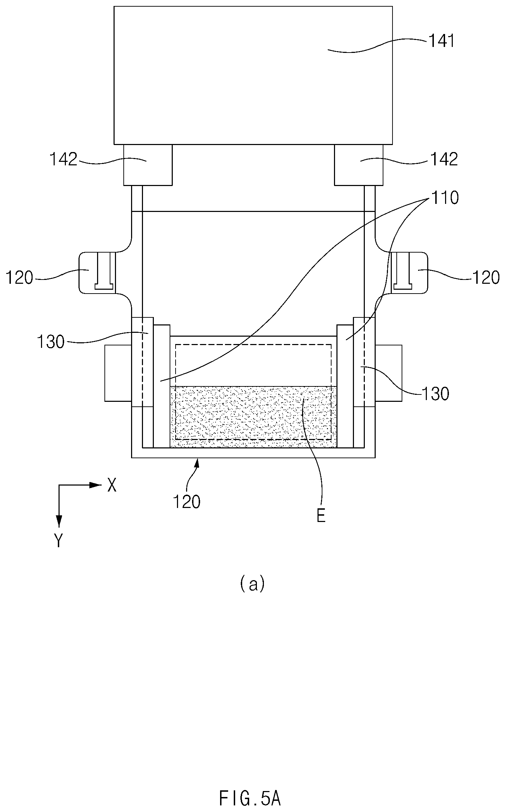

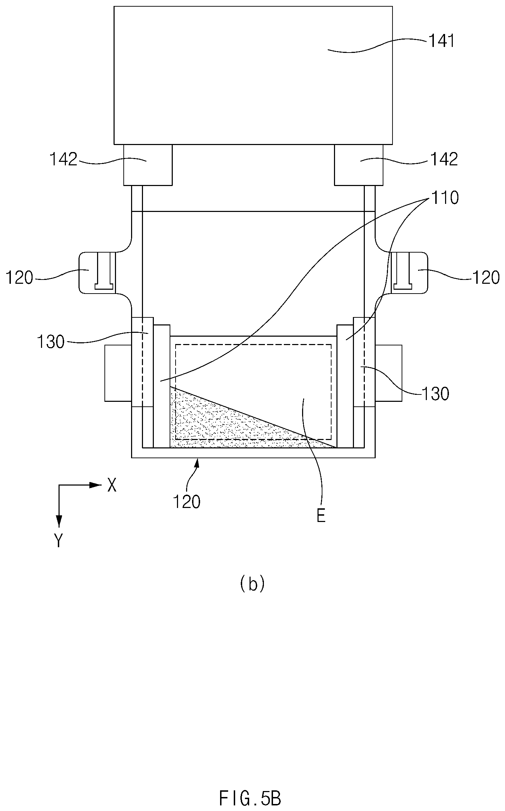

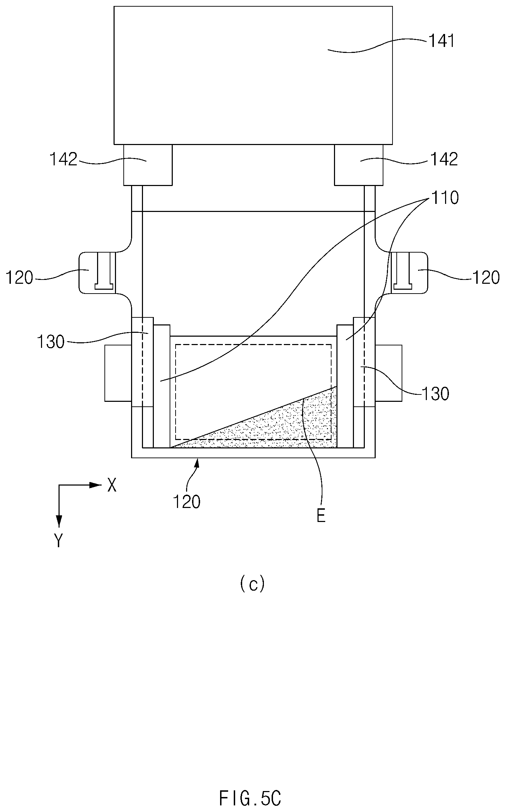

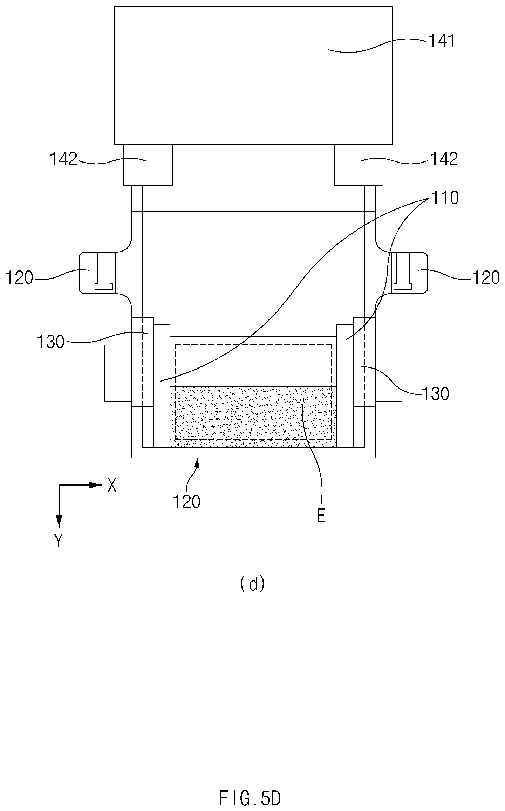

As illustrated in FIGS. 4 and 5, the transfer apparatus 100 for the secondary battery according to the present invention may further include a connection part 130 that connects the accommodation part gripper 110 to the frame part gripper 120.

Specifically, the connection part 130 is a component, which connects the accommodation part gripper 110 to the frame part gripper 120, and may be understood as a component that allows the accommodation part gripper 110 and the frame part gripper 120 to operate as one body during the transfer of the secondary battery 10 so that the accommodation part gripper 110 and the frame part gripper 120 grip the battery case 12 at the same time.

This connection part 130 may be detachably coupled to each of the accommodation part gripper 110 and the frame part gripper 120. To this end, the connection part 130 may be bolt-coupled to each of the accommodation part gripper 110 and the frame part gripper 120.

At least one through-hole h may be defined in one side surface of the connection part 130. Here, the through-hole h may be provided in at least one, and may be provided in plurality in a longitudinal direction of the connection part 130 (direction parallel to a Y direction in FIG. 4).

In addition, the through-hole h may have various shapes. Here, the through-hole h may have an oval shape that is elongated in a thickness direction of the connection part 130 (direction parallel to the Z direction in FIG. 4).

A fixing part 150 fixed and coupled to the accommodation part gripper 110 may pass through the through-hole h. Here, the fixing part 150 may be a bolt, and the fixing part 150 may pass through the through-hole h and have an end fixed to the accommodation part gripper 110 so as to fix and couple the connection part 130 and the accommodation part gripper 110 to each other. In this case, a groove or hole into which the fixing part 150 is insertable may be defined also in the accommodation part gripper 110.

Here, when the through-hole h has an oval shape elongated in the thickness direction of the connection part 130, a coupling position of the fixing part 150 may also be adjusted based on the thickness direction of the connection part 130. Accordingly, in the accommodation part gripper 110, a height between the accommodation part gripper 110 and the connection part 130 may be adjusted according to the coupling position of the fixing part 150 to the through-hole h. In this case, there is an advantage that the position of the accommodation part gripper 110 may be easily adjusted even when the thickness of the accommodation part 12a or the like is changed according to a model type of the secondary battery 10.

The transfer apparatus 100 for the secondary battery according to the present invention may further include a position moving part 140 that is connected to one of the frame part gripper 120 and the accommodation part gripper 110 and moves a position of the one of the frame part gripper 120 and the accommodation part gripper 110.

The position moving part 140 may include a body 141, and a pair of arm parts 142, each of which is connected to the body 141 and at least one of the frame part gripper 120 or the accommodation part gripper 110.

Here, the body 141 may include a frame capable of supporting the pair of arm parts 142, a driving motor for moving positions of the pair of arm parts 142, and the like.

The arm part 142 is a component, which is connected to the body 141 and at least one of the frame part gripper 120 or the accommodation part gripper 110, and may have various configurations.

Specifically, the arm part 142 may have one end connected to the body 141, and the other end connected to at least one of the frame part gripper 120 or the accommodation part gripper 110, so as to move the position of the one of the frame part gripper 120 and the accommodation part gripper 110.

Here, the pair of arm parts 142 may be provided to be rotatable while conducting a circular arc motion about the body 141 so that the positions of the arm parts 142 are exchanged with each other. In this case, positions of the front surface and the rear surface of the secondary battery 10 may be exchanged with each other.

Hereinafter, operations in which the transfer apparatus 100 for the secondary battery according to the present invention described above transfers the secondary battery 10 will be described in more detail with reference to FIGS. 5A and 5B.

First, FIG. 5A is a view illustrating a state in which the accommodation part gripper 110 and the frame part gripper 120 of the transfer apparatus 100 for the secondary battery grip the secondary battery 10. In this case, each of the accommodation part gripper 110 and the frame part gripper 120 may perform forward movement in a direction that is close to the secondary battery 10 (Y direction in FIG. 5A), and the gripper units 111A and 111B of the accommodation part gripper 110 and the gripper units 121A and 121B of the frame part gripper 120 may grip and fix the accommodation part 12a and the frame part 12b, respectively. Here, the electrolyte E embedded in the accommodation part 12a may move from the edge to a central portion of the accommodation part 12a as the gripper units 111A and 111B of the accommodation part gripper 110 press the accommodation part 12a.

FIG. 5B is a view illustrating a state in which the secondary battery 10 gripped by the accommodation part grippers 110 and the frame part grippers 120 is upside down. In this case, the arm part 142 connected to at least one of the accommodation part gripper 110 or the frame part gripper 120 may be rotated while conducting a circular arc motion about the body 141, and thus the secondary battery 10 may be upside down. Here, the positions of the front surface and the rear surface of the secondary battery 10 may be exchanged with each other.

Here, as the secondary battery 10 is upside down, the electrolyte E may severely flow inside the accommodation part 12a. However, as the edge of the accommodation part 12a is pressed by the accommodation part gripper 110, the electrolyte E may not reach the edge of the accommodation part 12a so that the separator is prevented from being folded.

FIG. 5C is a view illustrating flowing of the electrolyte E right after the secondary battery 10 gripped by the accommodation part grippers 110 and the frame part grippers 120 is upside down. Here, as the electrolyte E has still flowability, the electrolyte E may flow inside the accommodation part 12. However, as the edge of the accommodation part 12a is pressed by the accommodation part gripper 110 like in FIG. 5B, the electrolyte E does not reach the edge of the accommodation part 12a. Accordingly, the separator may be prevented from being folded even right after the secondary battery 10 is upside down.

FIG. 5D is a view illustrating a state in which the electrolyte E does not flow after the secondary battery 10 gripped by the accommodation part grippers 110 and the frame part grippers 120 is upside down. Here, as the electrolyte E does not flow any more, the folding of the separator may not occur any more. Thus, the gripper units 111A and 111B of the accommodation part gripper 110 and the gripper units 121A and 121B of the frame part gripper 120 may release the pressing of the accommodation part 12a and the frame part 12b. Here, a portion of the electrolyte E embedded in the accommodation part 12a may move again toward the edge of the accommodation part 12a as the pressing by the gripper units 111A and 111B of the accommodation part gripper 110 is released. Each of the accommodation part gripper 110 and the frame part gripper 120 may perform backward movement in a direction that is away from the secondary battery (direction opposite to a Y direction in FIG. 5D).

### Embodiment 2

In Embodiment 2 of the present invention, shapes of gripper units 111A and 111B of an accommodation part gripper 110 and gripper units 121A and 121B of an frame part gripper 120 are partially different from the shapes of the gripper units 111A and 111B of the accommodation part gripper 110 and the gripper units 121A and 121B of the frame part gripper 120 according to Embodiment 1.

Embodiment 2 will be described by omitting the content in common with Embodiment 1 and focusing on differences. That is, it is apparent that the content that is not described in Embodiment 2 may be regarded as the content of Embodiment 1 if necessary.

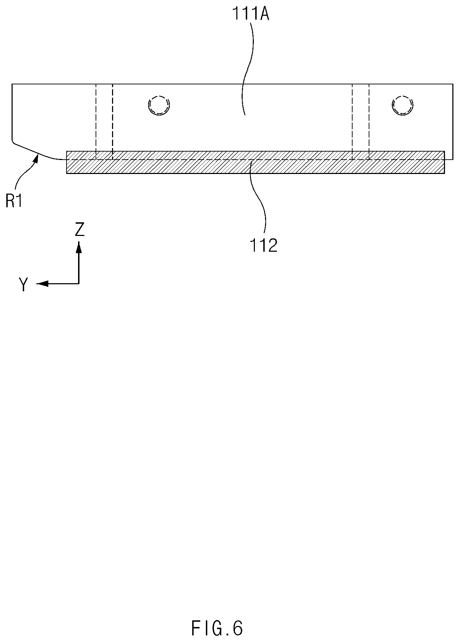

First, FIG. 6 illustrates the gripper unit 111A of the accommodation part gripper 110. Here, an end of the gripper unit 111A may be provided so that a surface facing the battery case 12 is inclined toward a distal end in a direction opposite to the battery case 12. That is, an inclined surface R1 that is inclined toward the distal end in the direction opposite to the battery case 12 may be provided on the surface, which faces the battery case 12, of the end of the gripper unit 111A. Here, although FIG. 6 illustrates only one gripper unit 111A of the pair of gripper units 111A and 111B that face the battery case 12, the inclined surface may also be provided on the other gripper unit 111B.

In this case, even when at least one of the accommodation part gripper 110 or the secondary battery 10 at a preset position is partially misaligned, the accommodation part gripper 110 may guide the position of the secondary battery 10 to move while performing forward movement toward the battery case 12. Accordingly, a damage likely to occur in the accommodation part 12a due to an interference between the accommodation part gripper 110 and the accommodation part 12a may be minimized.

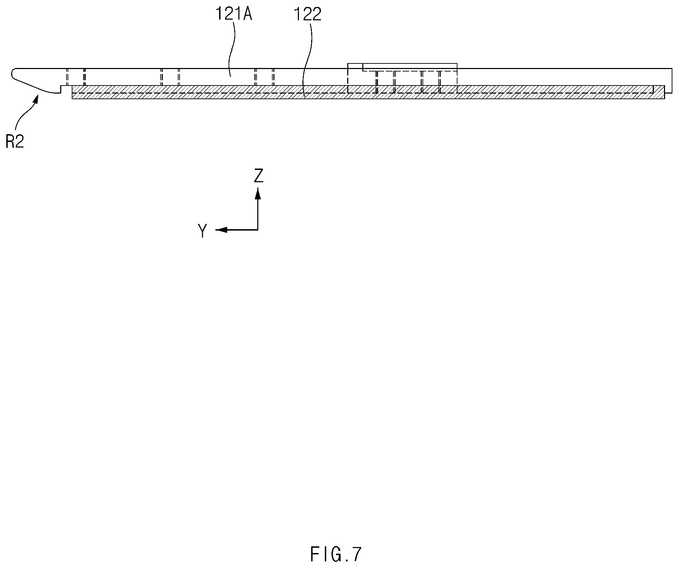

Likewise, referring to FIG. 7, an end of the gripper unit 121A of the frame part gripper 120 may be provided so that a surface facing the battery case 12 is inclined toward the distal end in the direction opposite to the battery case 12.

That is, an inclined surface R2 that is inclined toward the distal end in the direction opposite to the battery case 12 may be provided on the surface, which faces the battery case 12, of the end of the gripper unit 121A. Here, although FIG. 7 illustrates only one gripper unit 121A of the pair of gripper units 121A and 121B that face the battery case 12, the inclined surface may also be provided on the other gripper unit 121B.

In this case, even when at least one of the frame part gripper 120 or the secondary battery 10 at a preset position is partially misaligned, the frame part gripper 120 may guide the position of the secondary battery 10 to move while performing forward movement toward the battery case 12. Accordingly, a damage likely to occur in the frame part 12b due to an interference between the frame part gripper 120 and the frame part 12b may be minimized.

Although the present invention has been described with reference to the limited embodiments and drawings, the present invention is not limited thereto and may be variously implemented by those of ordinary skill in the art to which the present invention pertains, within the technical idea of the present invention and an equivalent of the appended claims.

### [Description of the Symbols]

10: Secondary battery
11: Electrode assembly
12: Battery case
12a: Accommodation part
12b: Frame part
13: Electrode lead
100: Transfer apparatus for secondary battery
110: Accommodation part gripper
111A: Gripper unit
111B: Gripper unit
112: Cushion pad
120: Frame part gripper
121A: Gripper unit
121B: Gripper unit
122: Friction pad
130: Connection part
140: Position moving part
141: Body
142: Arm part
150: Fixing part
E: Electrolyte
R1: Inclined surface of gripper unit included in accommodation part gripper
R2: Inclined surface of gripper unit included in frame part gripper
h: Through-hole

## Claims

1. An apparatus for manufacturing a secondary battery comprising an electrode assembly, in which an electrode and a separator are alternately stacked, and a battery case configured to accommodate the electrode assembly, the transfer apparatus comprising:
a pair of accommodation part grippers configured to grip an accommodation part, in which the electrode assembly is accommodated, of the battery case; and
a pair of frame part grippers configured to grip an frame part extending from an edge of the accommodation part of the battery case.

2. The transfer apparatus of claim 1, wherein the accommodation part grippers are provided to grip the edge of the accommodation part.

3. The transfer apparatus of claim 1, wherein the secondary battery further comprises an electrode lead protruding from at least one end of the battery case, and
wherein the accommodation part grippers are provided to grip the edge of the accommodation part, which is adjacent to the electrode lead.

4. The transfer apparatus of claim 1, wherein each of the frame part grippers comprises a pair of gripper units which are provided to face each other with the battery case therebetween, and of which a distance therebetween is adjusted.

5. The transfer apparatus of claim 4, wherein each of the gripper units has an end provided so that a surface facing the battery case is inclined toward a distal end in a direction opposite to the battery case.

6. The transfer apparatus of claim 4, wherein the frame part gripper further comprises a friction pad provided on a surface, which faces the battery case, of each of the gripper units.

7. The transfer apparatus of claim 6, wherein a material of the friction pad comprises rubber.

8. The transfer apparatus of claim 1, wherein each of the accommodation part grippers comprises a pair of gripper units provided to face each other with the battery case therebetween, and of which a distance therebetween is adjusted.

9. The transfer apparatus of claim 8, wherein each of the gripper units has an end provided so that a surface facing the battery case is inclined toward a distal end in a direction opposite to the battery case.

10. The transfer apparatus of claim 8, wherein the accommodation part gripper further comprises a cushion pad provided on a surface, which faces the battery case, of each of the gripper unit.

11. The transfer apparatus of claim 10, wherein a material of the cushion pad comprises ethylene-vinyl acetate (EVA).

12. The transfer apparatus of claim 1, further comprising at least one connection part configured to connect the accommodation part gripper to the frame part gripper.

13. The transfer apparatus of claim 12, wherein the accommodation part gripper, the frame part gripper, and the connection part are detachably coupled to each other.

14. The transfer apparatus of claim 12, wherein the connection part has at least one through-hole defined in one side surface, and
the transfer apparatus further comprises a fixing part passing through the through-hole and fixed and coupled to the accommodation part gripper.

15. The transfer apparatus of claim 14, wherein the through-hole has an oval shape that is elongated in a thickness direction of the connection part, and
in the accommodation part gripper, a height between the accommodation part gripper and the connection part is adjusted according to a coupling position of the fixing part to the through-hole.

16. The transfer apparatus of claim 1, further comprising a position moving part connected to one of the frame part gripper and the accommodation part gripper and configured to move a position of the one of the frame part gripper and the accommodation part gripper.

17. The transfer apparatus of claim 16, wherein the position moving part comprises:
a body; and
a pair of arm parts, each of which is connected to the body and at least one of the frame part gripper or the accommodation part gripper,
wherein the pair of arm parts are provided to be rotatable while conducting a circular arc motion about the body so that the positions of the arm parts are exchanged with each other.
